# EUROPEAN PATENT APPLICATION

(11) **EP 4 564 243 A1**
(43) Date of publication of application: **04.06.2025**
(21) Application number: 23845915.0
(22) Date of filing: 04.04.2023
(51) Int. Cl.: G06N 20/00, G06T 7/10, G06V 10/776

(54) **DETERMINATION EVALUATION DEVICE, METHOD, AND PROGRAM**

(30) Priority: 28.07.2022 JP 2022120852
(71) Applicant: Hitachi, Ltd., Tokyo 100-8280 (JP)
(72) Inventor: MIYANAGA, Mizuki, Tokyo 100-8280 (JP); EGI, Masashi, Tokyo 100-8280 (JP); KURATA, Sayaka, Tokyo 100-8280 (JP); KANDA, Takayuki, Tokyo 100-8280 (JP)
(74) Representative: Mewburn Ellis LLP
(86) International application number: PCT/JP2023/013968
(87) International publication number: WO 2024/024175

(57) **Abstract**

It is evaluated how reliable a determination result by a determination model is. A determination evaluation device that evaluates a determination result for input data based on a determination model includes an uncertainty calculation unit that calculates uncertainty of the determination result, and an analysis evaluation unit that evaluates the determination result on the basis of the uncertainty.

## Description

### Technical Field

The present disclosure relates to a technique of evaluating a determination ability of artificial intelligence that analyzes an image and classifies each pixel into a class.

### Background Art

In various fields, artificial intelligence is used in processing of dividing a captured image into a plurality of regions. For example, in the fields of medicine, material science, and the like, artificial intelligence is useful for processing in which an image obtained by photographing a state in which a plurality of materials is mixed is distinguished with a different color for each material. In order to enable determination by artificial intelligence, it is necessary to construct a determination model by learning train data including an image prepared in advance and a correct answer label in which the image is distinguished with a different color for each region.

However, in order to prepare highly accurate train data, it is necessary to manually and accurately assign a correct label to an image, which is time-consuming work. Therefore, train data is often insufficient. If the train data is insufficient, there is a portion of the determination model that has not sufficiently learned the train data. In that case, the accuracy of a determination result for the image belonging to such a portion decreases. In relation to such a problem, PTL 1 discloses a technique for searching for a measure for improving a value of a predetermined index while ensuring that uncertainty indicating a reliable degree of an estimation result falls within an allowable range.

### Citation List

### Patent Literature

PTL 1: JP 2020-30500 A

### Summary of Invention

### Technical Problem

If the result of the determination processing by the artificial intelligence is reliable, it is easy to create train data on the basis of the determination result, and manual work when assigning a correct answer label to input data is reduced.

However, the technique of PTL 1 is a technique for searching for measures as described above, and is unsuitable for evaluating how reliable the result of the determination processing by the artificial intelligence is.

An object of the present disclosure is to provide a technique for evaluating how reliable a determination result by a determination model is.

### Solution to Problem

A determination evaluation device according to one aspect of the present disclosure is a determination evaluation device that evaluates a determination result for input data based on a determination model, the determination evaluation device including: an uncertainty calculation unit that calculates uncertainty of the determination result; and an analysis evaluation unit that evaluates the determination result on the basis of the uncertainty.

An evaluation determination method according to one aspect of the present disclosure is a determination evaluation method that evaluates a determination result for input data based on a determination model, the determination evaluation method including: calculating uncertainty of the determination result; and evaluating the determination result on the basis of the uncertainty.

An evaluation determination program according to one aspect of the present disclosure is a determination evaluation program that evaluates a determination result for input data based on a determination model, the determination evaluation program causing a computer to execute: calculating uncertainty of the determination result; and evaluating the determination result on the basis of the uncertainty.

### Advantageous Effects of Invention

According to one aspect of the present disclosure, it is possible to evaluate how reliable a determination result by a determination model is.

### Brief Description of Drawings

[FIG. 1] FIG. 1 is a block diagram illustrating a configuration example of a determination evaluation device according to the present embodiment.
[FIG. 2] FIG. 2 illustrates an example of learning data according to the present embodiment.
[FIG. 3] FIG. 3 illustrates an example of a machine learning model according to the present embodiment.
[FIG. 4] FIG. 4 illustrates an example of test data according to the present embodiment.
[FIG. 5] FIG. 5 illustrates an example of determination result data according to the present embodiment.
[FIG. 6] FIG. 6 illustrates an example of uncertainty data according to the present embodiment.
[FIG. 7] FIG. 7 illustrates an example of an evaluation rule according to the present embodiment.
[FIG. 8] FIG. 8 illustrates an example of an evaluation result according to the present embodiment.
[FIG. 9] FIG. 9 is a block diagram illustrating details of an analysis evaluation unit according to the present embodiment.
[FIG. 10] FIG. 10 is a flowchart illustrating an example of processing of an uncertainty calculation unit according to the present embodiment.
[FIG. 11] FIG. 11 is a flowchart illustrating an example of processing of an analysis evaluation unit according to the present embodiment.
[FIG. 12] FIG. 12 is a flowchart illustrating an example of processing in a case where the condition with a rule ID "1001" in FIG. 7 is applied in step S206 illustrated in FIG. 11.
[FIG. 13] FIG. 13 is a diagram illustrating an example of an evaluation result display screen 1 according to the present embodiment.

### Description of Embodiments

Hereinafter, an embodiment of the present invention will be described with reference to the drawings.

### (Present Embodiment)

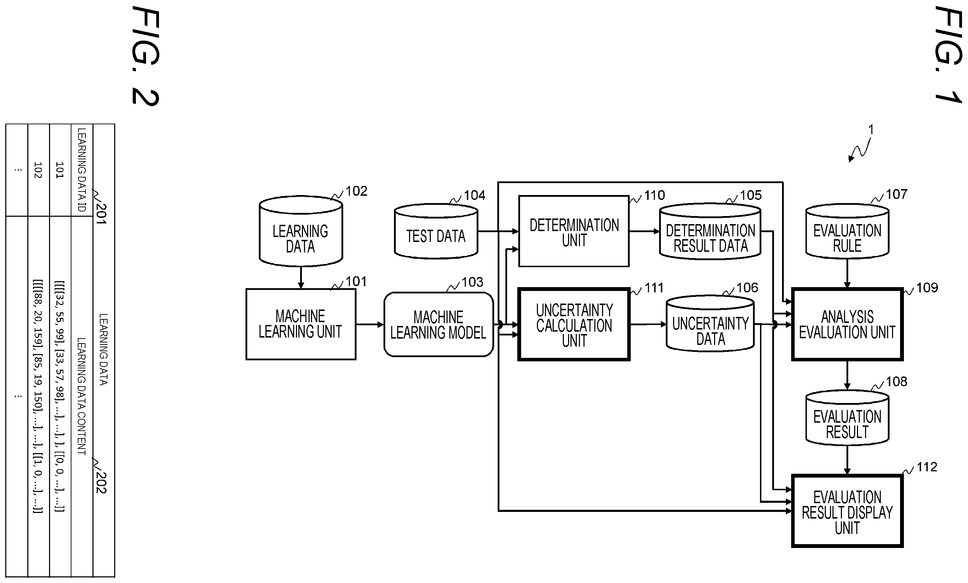

FIG. 1 is a block diagram illustrating a configuration example of a determination evaluation device 1 according to the present embodiment.

The determination evaluation device 1 is a device that evaluates uncertainty of a boundary of an input image (that is, a boundary between different classes) when segmentation (that is, classification of each pixel into classes) is performed on the input image by using a machine learning model 103. The uncertainty is an index indicating the low level of reliability of the boundary of the segment calculated by the machine learning model 103. That is, the boundary of the segment with high uncertainty has low reliability, and the boundary of the segment with low uncertainty has high reliability.

The determination evaluation device 1 includes a machine learning unit 101, a determination unit 110, an uncertainty calculation unit 111, an analysis evaluation unit 109, and an evaluation result display unit 112. In addition, the determination evaluation device 1 stores learning data 102, the machine learning model 103, test data 104, determination result data 105, uncertainty data 106, an evaluation rule 107, and an evaluation result 108.

The learning data 102 is data used for training of the machine learning model 103. FIG. 2 illustrates an example of the learning data 102 according to the present embodiment. As illustrated in FIG. 2, the learning data 102 is data in which learning data ID 201 and learning data content 202 are recorded in association with each other.

The learning data ID 201 is information for identifying the learning data content 202. The learning data content 202 includes a pixel value of each pixel (pixel) constituting an input image for learning and a correct class (correct label) into which each pixel (pixel) constituting the input image is classified.

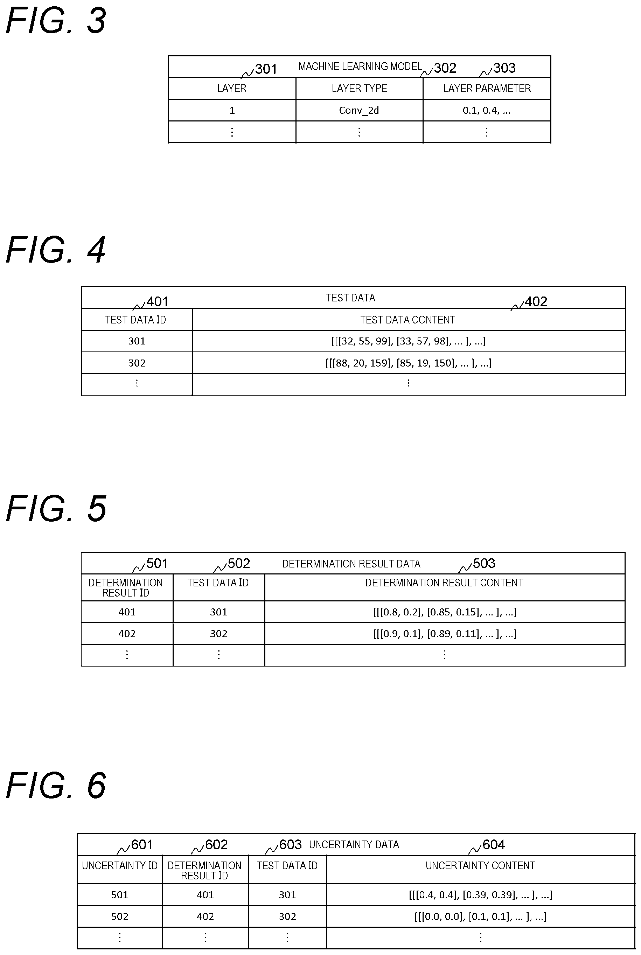

The machine learning unit 101 uses the learning data 102 to perform machine learning on the machine learning model 103 that performs class determination (labeling) on each pixel of the input image. The machine learning may be deep learning. Examples of the machine learning model 103 may be convolutional neural network (CNN), SegNet, U-Net, PSPNet, and the like. FIG. 3 illustrates an example of the machine learning model 103 according to the present embodiment. The machine learning model 103 is represented by data in which a layer 301, a layer type 302, and a layer parameter 303 are associated with each other.

The layer 301 is information for identifying the layer of the machine learning model 103.

The layer type 302 is information indicating the type of the layer 301. Examples of the layer type include an input layer, a convolution layer, a pooling layer, a fully connected layer, and an output layer.

The layer parameter is information indicating the parameter of the layer 301 (for example, the weight of each neuron) .

The test data 104 is data used for the evaluation determination for the machine learning model 103. FIG. 4 illustrates an example of the test data 104 according to the present embodiment. As illustrated in FIG. 4**,** the test data 104 includes test data ID 401 and test data content 402 as items.

The test data ID 401 is information for identifying the test data content 402.

As the test data content 402, the pixel value of each pixel of the input image for evaluation determination is recorded.

The determination unit 110 performs the evaluation determination of the machine learning model 103 by using the test data 104 and generates the determination result data 105. FIG. 5 illustrates an example of the determination result data 105 according to the present embodiment. As illustrated in FIG. 5, the determination result data 105 is data in which determination result ID 501, test data ID 502, and determination result content 503 are recorded in association with each other for each entry.

The determination result ID 501 is information for identifying a determination result in the entry.

The test data ID 502 is information for identifying the test data used for the evaluation determination in the entry, and corresponds to the test data ID 401 illustrated in FIG. 4.

The determination result content 503 indicates the content of the determination result in the entry. As the content of the determination result, the probability of classification of each pixel constituting the test data content 402 (test image) of the test data ID 502 into each class by the machine learning model 103 is described. That is, the determination result content 503 is data indicating, for each pixel constituting the test image, a probability that the pixel is classified into each class. For example, it is conceivable that a determination result for a pixel near a boundary between a first segment and a second segment includes a probability of belonging to the first segment (first class) and a probability of belonging to the second segment (second class), and the sum of the probability of belonging to the first segment and the probability of belonging to the second segment is 1.

For example, the uncertainty calculation unit 111 calculates the uncertainty of the machine learning model 103 by using the test data 104 and generates the uncertainty data 106. FIG. 6 illustrates an example of the uncertainty data 106 according to the present embodiment. As illustrated in FIG. 6, the uncertainty data 106 is data in which uncertainty ID 601, determination result ID 602, and test data 603 are recorded in association with each other for each entry.

The uncertainty ID 601 is information for identifying the entry for which the uncertainty has been calculated using the test data.

The determination result ID 602 is information for identifying the determination result corresponding to the entry, and corresponds to the determination result ID 501 illustrated in FIG. 5.

The test data ID 603 is information for identifying the test data used for calculating the uncertainty in the entry, and corresponds to the test data ID 401 illustrated in FIG. 4 and the test data ID 502 illustrated in FIG. 5.

Uncertainty content 604 indicates the value of the uncertainty calculated in the entry. That is, the uncertainty value of each pixel calculated using the test data 104 of the test data ID 603 is recorded in the uncertainty content 604.

The uncertainty is obtained, for example, by the following processing. First, a plurality of machine learning models in which a part of a plurality of nodes constituting the machine learning model 103 is intentionally dropped out by a Monte Carlo method (hereinafter, referred to as a Monte Carlo dropout model) are generated. Next, the input image is input to each Monte Carlo dropout model, and each determination result (class classification of each pixel) is obtained. Then, the variance value of a plurality of determination results for each pixel obtained in this manner is calculated and used as the value of uncertainty of the pixel. That is, it can be said that the uncertainty is a variance value of a class of each pixel obtained from mutually different Monte Carlo dropout models. In other words, it can be said that the uncertainty is a value indicating how much the boundary of the segmentation obtained by each Monte Carlo dropout model fluctuates by each dropout model (that is, the reliability of the boundary of the segmentation).

That is, the uncertainty calculation unit 111 may set, as the uncertainty, the variance value of the class of each pixel calculated using the Monte Carlo dropout. Accordingly, the uncertainty calculation unit 111 can calculate the uncertainty by using the test data having no correct answer label.

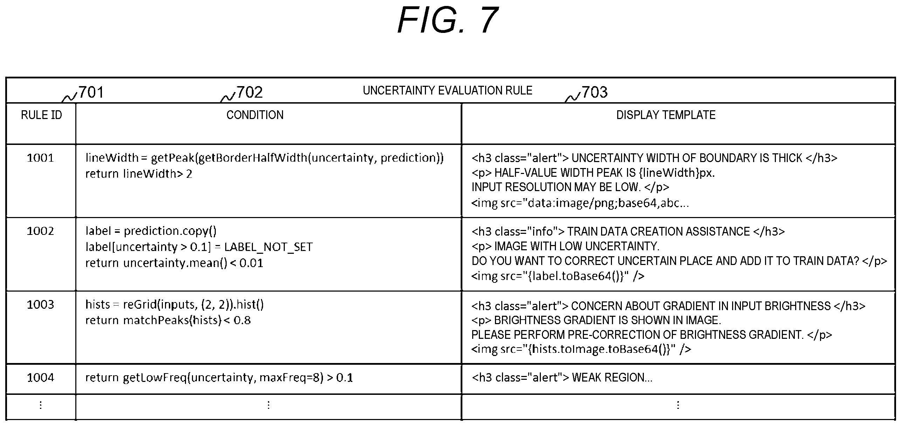

The evaluation rule 107 is a rule used for the evaluation of the uncertainty. FIG. 7 illustrates an example of the evaluation rule 107 according to the present embodiment. As illustrated in FIG. 7, in the evaluation rule 107, a rule ID 701, a condition 702, and a display template 703 are recorded in association with each other for each rule.

The rule ID 701 is information for identifying the rule, and with the rule ID, a set of the condition 702 and the display template 703 identified for the rule.

The condition 702 is information indicating a condition (evaluation method) used for the evaluation of the uncertainty. For example, in a case where the condition is satisfied, it is evaluated that the uncertainty is high.

The display template 703 is a template defining contents to be displayed in a case where condition 702 is satisfied. For example, the display content is defined to display high uncertainty and a recommended method to cope with the high uncertainty.

That is, in a case where the condition 702 is satisfied, the content of the uncertainty is displayed on the basis of the display template 703 associated with the condition 702. A user can see the contents of the uncertainty displayed on the basis of the display template 703 to know what kind of uncertainty may occur, a coping method for further reducing the uncertainty, and the like.

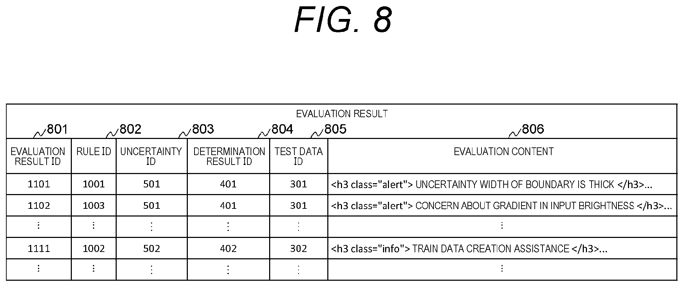

The analysis evaluation unit 109 performs analysis evaluation by using the evaluation rule 107, the test data 104, the determination result data 105, and the uncertainty data 106, and generates the evaluation result 108. Details of the analysis evaluation processing will be described later. FIG. 8 illustrates an example of the evaluation result 108 according to the present embodiment. The evaluation result 108 is, for example, data in which an evaluation result ID 801, a rule ID 802, an uncertainty ID 803, a determination result ID 804, a test data ID 805, and evaluation content 806 are recorded in association with each other for each entry of analysis evaluation.

The evaluation result ID 801 is information for identifying the analysis evaluation of the entry.

The rule ID 802 is information for identifying the rule used for the analysis evaluation of the entry and corresponds to the rule ID 701 illustrated in FIG. 7.

The uncertainty ID 803 is information for identifying the uncertainty data used for the analysis evaluation of the entry, and corresponds to the uncertainty ID 601 illustrated in FIG. 6.

The determination result ID 804 is information for identifying the determination result used for the analysis evaluation of the entry and corresponds to the determination result ID 501 illustrated in FIG. 5.

The test data ID 805 is information for identifying the test data used for the analysis evaluation of the entry, and corresponds to the test data ID 502 illustrated in FIG. 4.

The evaluation content 806 indicate the evaluation content obtained by applying the evaluation rule indicated by the rule ID 802 to the test data indicated by the test data ID 805, the determination result indicated by the determination result ID 804, and the uncertainty indicated by the uncertainty ID 803. For example, in a case where the condition 702 of the evaluation rule of the entry having a certain rule ID 701 illustrated in FIG. 7 is satisfied, the display content defined in the display template 703 of the entry is recorded in the evaluation content 806.

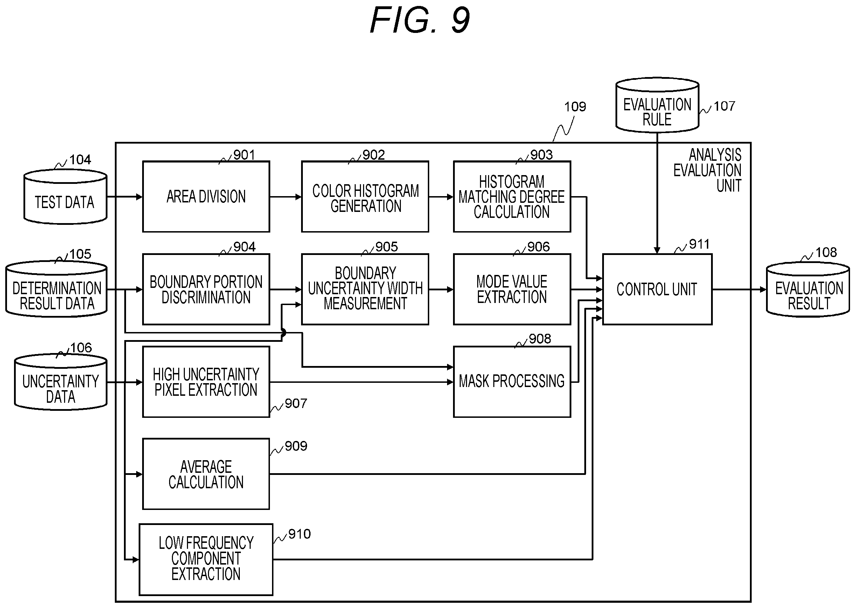

Note that details of the analysis evaluation unit 109 will be described later (see FIG. 9).

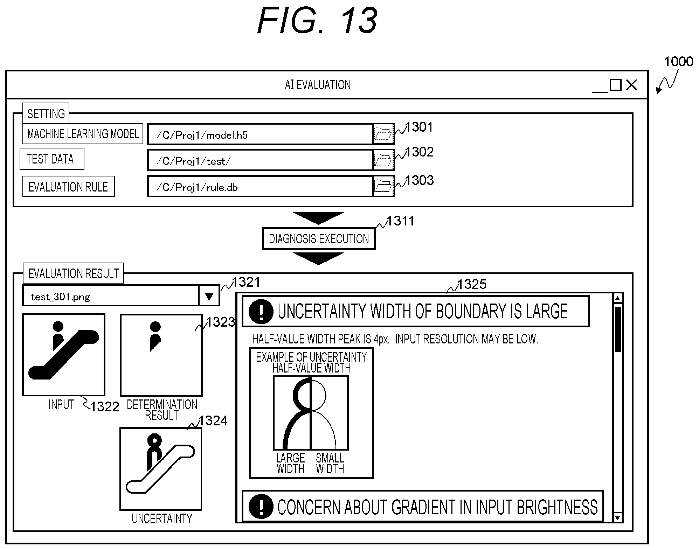

The evaluation result display unit 112 generates an evaluation result display screen 1000 (see FIG. 13) on the basis of the test data 104, the determination result data 105, the uncertainty data 106, and the evaluation result 108, and displays the screen on a monitor or the like.

As described above, the determination evaluation device 1 is a device that evaluates a determination result for input data based on a determination model, and includes the uncertainty calculation unit 111 that calculates the uncertainty of the determination result**,** and the analysis evaluation unit 109 that evaluates the determination result on the basis of the uncertainty. Accordingly, the determination evaluation device 1 can evaluate how reliable the determination result by the determination model is**.**

In the present embodiment, the input data is an input image, and the above determination is processing of classifying the input image into regions of a plurality of classes. The analysis evaluation unit 109 may calculate the uncertainty of the classification of the input image for each pixel, and evaluate the determination result on the basis of the distribution of the class on the input image and the distribution of the uncertainty on the input image. Accordingly, how reliable the result of the determination by the determination model can be evaluated on the basis of the distribution of uncertainty at each position in the image in the determination result of dividing the image into a plurality of regions.

FIG. 9 is a block diagram illustrating details of the analysis evaluation unit 109 according to the present embodiment.

The analysis evaluation unit 109 includes an area division unit 901, a color histogram generation unit 902, a histogram matching degree calculation unit 903, a boundary portion discrimination unit 904, a boundary uncertainty width measurement unit 905, a mode value extraction unit 906, a high uncertainty pixel extraction unit 907, a mask processing unit 908, an average calculation unit 909, a low frequency component extraction unit 910, and a control unit 911.

The area division unit 901 divides the image of the test data 104 into a plurality of areas in a lattice pattern, for example.

The color histogram generation unit 902 generates a color histogram of each area divided by area division.

The histogram matching degree calculation unit 903 calculates the matching degree of the color histogram between the areas generated by the color histogram generation.

The boundary portion discrimination unit 904 discriminates the boundary portion of a class in the image on the basis of the determination result data 105.

The boundary uncertainty measurement unit 905 measures the width of uncertainty at the boundary portion of the class discriminated by the boundary portion discrimination 904, on the basis of the uncertainty data 106. The width of uncertainty at the boundary portion indicates the degree of uncertainty at the boundary portion, that is, the level of uncertainty of the boundary. A method of calculating the width of uncertainty will be described later.

The mode value extraction unit 906 extracts a mode value among a plurality of widths of uncertainty measured by the boundary uncertainty measurement 905.

The high uncertainty pixel extraction unit 907 extracts a pixel having high uncertainty (for example, the value of uncertainty is equal to or greater than a predetermined threshold) on the basis of the uncertainty data 106.

The mask processing unit 908 masks the data of the pixel extracted in the high uncertainty pixel extraction 907 in the determination result data 105.

The average calculation unit 909 calculates the average value of values of uncertainty in the uncertainty data 106.

The low frequency component extraction unit 910 extracts the low frequency component (for example, a frequency component equal to or less than a predetermined threshold) of the value of uncertainty in the uncertainty data 106.

The control unit 911 evaluates the result of the histogram matching degree calculation 903, the result of the mode value extraction 906, the result of the mask processing 908, the result of the average calculation 909, and the result of the low frequency component extraction 910 by applying each rule defined in the evaluation rule 107, and outputs the evaluation result 108.

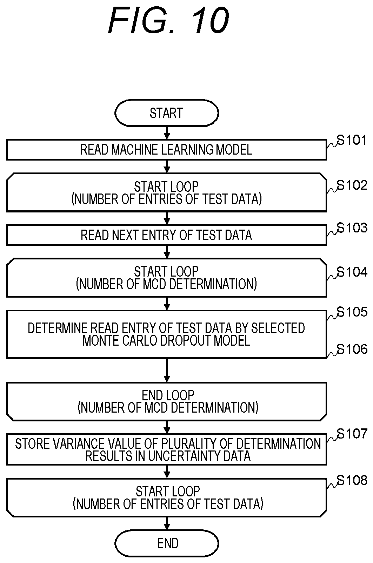

FIG. 10 is a flowchart illustrating an example of processing of the uncertainty calculation unit 111 according to the present embodiment.

The uncertainty calculation unit 111 reads the machine learning model 103 (S101).

The uncertainty calculation unit 111 repeats steps S102 to S107 by the number of entries included in the test data 104 (S102).

The uncertainty calculation unit 111 reads the test data of the next entry from the test data 104 (S103).

The uncertainty calculation unit 111 repeats step S105 by the predetermined number of Monte Carlo dropout models (the number of times of MCD determination) (S104).

The uncertainty calculation unit 111 selects any one of a plurality of Monte Carlo dropout models generated from the machine learning model read in step S101, and classifies each pixel of the test data (that is, an input image) read in step S103 into a class by using the selected Monte Carlo dropout model. (S105).

The uncertainty calculation unit 111 repeats step S105 while switching the Monte Carlo dropout model by the number of Monte Carlo dropout models (the number of times of MCD determination), and then advances the processing to step S107 (S106).

For each pixel, the uncertainty calculation unit 111 calculates the variance value of the determination results obtained from different Monte Carlo dropout models in step S105, and stores the variance value in the uncertainty data 106 (S107).

The uncertainty calculation unit 111 repeats steps S103 to S107 by the number of entries included in the test data 104 (that is, the number of test data) (S108), and then ends this processing.

Through the above processing, uncertainty data is obtained.

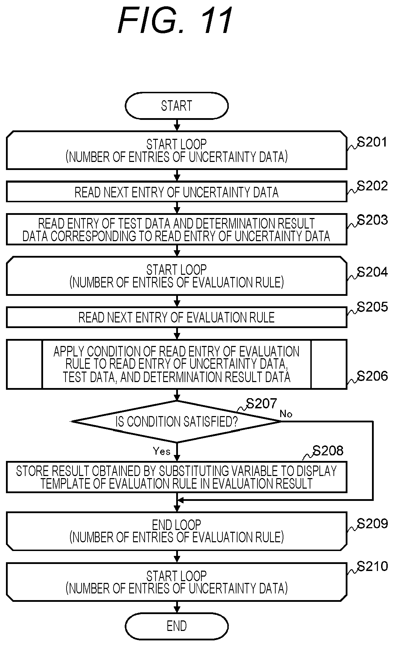

FIG. 11 is a flowchart illustrating an example of processing of the analysis evaluation unit 109 according to the present embodiment.

The analysis evaluation unit 109 repeats steps S202 to S209 by the number of entries included in the uncertainty data 106 (S201).

The analysis evaluation unit 109 reads the next entry of the uncertainty data 106 (S202).

The analysis evaluation unit 109 reads the test data 104 and the determination result data 105 corresponding to the entry of the uncertainty data 106 read in step S201 (S203).

The analysis evaluation unit 109 repeats steps S205 to S208 by the number of entries included in the evaluation rule 107 (S204).

The analysis evaluation unit 109 reads the next entry of the evaluation rule 107 (S205).

The analysis evaluation unit 109 applies the condition of the evaluation rule 107 of the entry read in step S205 to the uncertainty data 106 read in step S202 and the test data 104 and the determination result data 105 read in step S203 (S206).

The analysis evaluation unit 109 determines whether or not the uncertainty data 106, the test data 104, and the determination result data 105 satisfy the condition 702 of the evaluation rule 107 (S207).

If the condition 702 is not satisfied (S207: No), the analysis evaluation unit 109 advances the processing to step S209.

If the condition 702 is satisfied (S207: YES), the analysis evaluation unit 109 stores, in the evaluation result 108, the result obtained by substituting a variable into the display content defined in the display template 703 of the evaluation rule 107 (S208), and advances the processing to step S209.

After repeating steps S205 to S208 by the number of entries included in the evaluation rule 107 (S209), the analysis evaluation unit 109 advances the processing to step S210.

The analysis evaluation unit 109 repeats steps S205 to S208 by the number of entries of the uncertainty data 106 (S210), and then ends this processing.

The evaluation result 108 is obtained by the above processing.

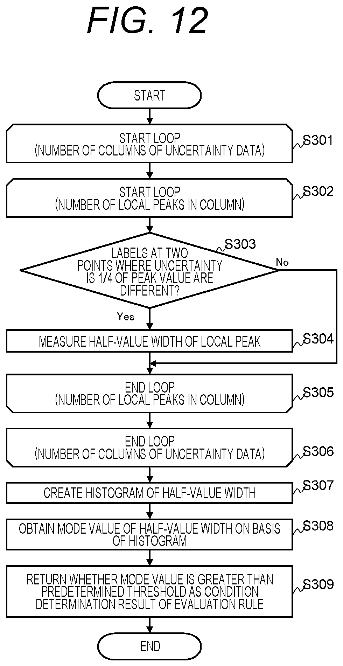

FIG. 12 is a flowchart illustrating processing in a case where the condition 702 of the rule ID "1001" in FIG. 7 is applied as an example of the processing of step S206 illustrated in FIG. 11.

The analysis evaluation unit 109 repeats steps S302 to S305 for each column of the uncertainty content 604 of the entry of the uncertainty data to be processed (S301).

The analysis evaluation unit 109 repeats steps S303 to S304 by the number of local peaks of uncertainty present in the column selected in step S301 (S302). The local peak of the uncertainty is a place showing a value larger than the uncertainty values on both neighboring points.

For the local peak of uncertainty selected in step S302, the analysis evaluation unit 109 determines whether or not the class of the pixel (hereinafter, it is referred to as a left pixel) that becomes 1/4 of the value of the local peak on the left side with the local peak interposed therebetween is different from the class of the pixel (hereinafter, it is referred to as a right pixel) that becomes 1/4 of the value of the local peak on the right side with the local peak interposed therebetween (S303). When the class of the left pixel of the local peak is different from the class of the right pixel, it can be said that the vicinity of the local peak is the boundary of the segment.

If the class of the left pixel of the local peak is not different from the class of the right pixel (S303: NO), the analysis evaluation unit 109 advances the processing to step S305.

If the class of the left pixel of the local peak is different from the class of the right pixel (S303: YES), the analysis evaluation unit 109 measures the half-value width of the local peak (S304) and advances the processing to step S305.

The analysis evaluation unit 109 repeats steps S303 to S304 by the number of local peaks of uncertainty, and then advances the processing to step S306 (S305).

The analysis evaluation unit 109 repeats steps S302 to S305 by the number of columns of the uncertainty data, and then advances the processing to step S307 (S306).

The analysis evaluation unit 109 creates a histogram of a plurality of half-value widths measured in step S304 (S307).

The analysis evaluation unit 109 acquires the mode value of the half-value width on the basis of the histogram created in step S307 (S308).

The analysis evaluation unit 109 returns, as a condition determination result of the evaluation rule, whether or not the mode value of the half-value width calculated in step S308 is larger than a predetermined threshold ("2" in the example of the evaluation rule of the rule ID "1001") (S309). Then, this processing ends.

When the half-value width is large, it means that the fluctuation of the boundary of the segment is large (that is, the uncertainty of the boundary is high), and when the half-value width is small, it means that the fluctuation of the boundary of the segment is small (that is, the uncertainty of the boundary is low). How much reliability is required for this boundary depends on the user, the application field, and the like. In a case where high reliability is required for the boundary, the user may set the threshold of step S309 to be small, and in a case where it is not necessary to require high reliability for the boundary, the user may set the threshold of step S309 to be large.

As described above, in the case of applying the condition 702 of the rule ID 701 "1001" illustrated in FIG. 7, the analysis evaluation unit 109 may perform the following processing. That is, the analysis evaluation unit 109 calculates, over the entire input image, a half-value width of a local peak at a place where a region of a different class exists in the distribution of the class on both sides of the local peak of the uncertainty in the distribution of the uncertainty, calculates the mode value of the half-value width, and when the mode value exceeds a predetermined threshold, evaluates the determination result of the image as high uncertainty of the boundary. Accordingly, it can be evaluated that the uncertainty of the boundary is high, that is, the resolution of the input image may be low.

Incidentally, in the case of applying the condition 702 of the rule ID 701 "1002" illustrated in FIG. 7, the analysis evaluation unit 109 may perform the following processing. That is, when the average value of the uncertainty in the input image is smaller than a predetermined threshold, the analysis evaluation unit 109 evaluates the determination result of the input image as low uncertainty. Accordingly, it is possible to evaluate that the input image has low uncertainty as a whole. It is possible to add an excellent image with low uncertainty to train data. When the excellent image with low uncertainty is added to the train data, if there is an uncertain place in the image, that portion may be partially corrected.

FIG. 13 is a diagram illustrating an example of an evaluation result display screen 1000 according to the present embodiment.

The evaluation result display screen 1000 may be generated by the evaluation result display unit 112 and displayed on a monitor or the like. The evaluation result display screen 1000 includes a machine learning model input region 1301, a test data input region 1302, an evaluation rule input region 1303, a diagnosis execution button 1311, a test data selection region 1321, an input image display region 1322, a determination result display region 1323, an uncertainty display region 1324, and an evaluation result display region 1325.

The user inputs, to the machine learning model input region 1301, the machine learning model 103 to be evaluated. For example, the user may select the file of the machine learning model 103 in the machine learning model input region 1301.

The user inputs the test data 104 used for evaluation to the test data input region 1302. For example, the user may select the file of the test data 104 in the test data input region 1302.

The user inputs, to the evaluation rule input region 1303, the evaluation rule 107 used for evaluation. For example, the user may select the file of the evaluation rule 107 in the evaluation rule input region 1303.

When the user presses the diagnosis execution button 1311, the determination evaluation device 1 executes the above-described uncertainty evaluation processing.

The user selects, from the test data selection region 1321, an input image for which an evaluation result is desired to be checked from among the images included in the test data 104.

The evaluation result display unit 112 displays, in the input image display region 1322, the input image selected in the test data selection region 1321.

The evaluation result display unit 112 displays, in the determination result display region 1323, a determination result image indicating a determination result for the input image displayed in the input image display region 1322. The determination result image may be an image indicating class classification (segmentation result) of the input image.

The evaluation result display unit 112 displays, in the uncertainty display region 1324, an uncertainty image for the determination result image displayed in the determination result display region 1323. The uncertainty image may be an image indicating the level of uncertainty of the boundary of the segment. For example, in the uncertainty image, a line indicating the boundary of the segment may be expressed to be thick according to the level of uncertainty. Alternatively, in the uncertainty image, the line indicating the boundary of the segment may be expressed in a high color of the heat map according to the level of uncertainty.

The evaluation result display unit 112 displays the evaluation result 108 in the evaluation result display region 1325. For example, in a case where the mode value of the half-value width illustrated in step S309 of FIG. 12 is larger than the predetermined threshold, the evaluation result display unit 112 may display, in the evaluation result display region 1325, information indicating that the mode value of the half-value width of the uncertainty of the boundary is larger than the predetermined threshold.

As described above, the evaluation result display unit 112 may display the input image, the image of the distribution of the class on the input image as the determination result, and the image of the distribution of the uncertainty on the input image. Accordingly, the user can visually recognize the uncertainty of the boundary of the segment with respect to the input image.

Note that the evaluation result display unit 112 may recommend that, for an input image evaluated to have low uncertainty, a determination result of a place with high uncertainty of the input image is corrected to create a correct answer label, and the correct answer label is added to train data. Accordingly, the machine learning model 103 can be trained again by using the added train data, and the uncertainty for the input image of the machine learning model 103 can be reduced (that is, the reliability can be improved) .

Note that each unit of the determination evaluation device 1 in the above-described embodiment can also be realized by causing a computer including a processor and a memory to execute a software program defining a processing procedure of each unit.

In addition, the above-described embodiment is an example for disclosure, and it is not intended to limit the scope of the present invention only to the embodiment. A person skilled in the art can implement the present invention in various other aspects without departing from the scope of the present invention.

### Reference Signs List

- 1: determination result device
- 101: machine learning unit
- 102: learning data
- 103: machine learning model
- 104: test data
- 105: determination result data
- 106: uncertainty data
- 107: evaluation rule
- 108: evaluation result
- 109: analysis evaluation unit
- 110: determination unit
- 111: uncertainty calculation unit
- 112: evaluation result display unit
- 201: learning data ID
- 202: learning data content
- 301: layer
- 302: layer type
- 303: layer parameter
- 401: test data ID
- 402: test data content
- 501: determination result ID
- 502: test data ID
- 503: determination result content
- 601: uncertainty ID
- 602: determination result ID
- 603: test data ID
- 604: uncertainty content
- 701: rule ID
- 702: condition
- 703: display template
- 801: evaluation result ID
- 802: rule ID
- 803: uncertainty ID
- 804: determination result ID
- 805: test data ID
- 806: evaluation content
- 901: area division
- 902: color histogram generation
- 903: histogram matching degree calculation
- 904: boundary portion discrimination
- 905: boundary uncertainty width measurement
- 905: boundary uncertainty measurement
- 906: mode value extraction
- 907: high uncertainty pixel extraction
- 908: mask processing
- 909: average calculation
- 910: low frequency component extraction
- 911: control unit
- 1000: evaluation result display screen
- 1301: machine learning model input region
- 1302: test data input region
- 1303: evaluation rule input region
- 1311: diagnosis execution button
- 1321: test data selection region
- 1322: input image display region
- 1323: determination result display region
- 1324: uncertainty display region
- 1325: evaluation result display region

## Claims

1. A determination evaluation device that evaluates a determination result for input data based on a determination model, the determination evaluation device comprising:
an uncertainty calculation unit that calculates uncertainty of the determination result; and
an analysis evaluation unit that evaluates the determination result on a basis of the uncertainty.

2. The determination evaluation device according to claim **1,** wherein
the input data is an image,
the determination is processing of classifying the image into regions of a plurality of classes, and
the analysis evaluation unit calculates uncertainty of the classification for each pixel, and evaluates the determination result on a basis of a distribution of classes on the image and a distribution of uncertainty on the image.

3. The determination evaluation device according to claim **2,** wherein
the analysis evaluation unit calculates, over the entire image, a half-value width of a local peak of uncertainty in the distribution of uncertainty at a place where a region of a different class exists in the distribution of the class on both sides of the local peak, calculates a mode value of the half-value width, and evaluates the determination result of the image as high uncertainty of a boundary when the mode value exceeds a predetermined threshold.

4. The determination evaluation device according to claim **2,** wherein
the analysis evaluation unit evaluates the determination result of the image as low uncertainty when an average value of the uncertainty in the image is smaller than a predetermined threshold.

5. The determination evaluation device according to claim 4, further comprising:
an evaluation result display unit that displays a screen based on the evaluation of the determination result, wherein
the evaluation result display unit recommends, for an image evaluated as low uncertainty, correcting a determination result of a place with high uncertainty of the image, creating a correct answer label, and adding the correct answer label to train data.

6. The determination evaluation device according to claim 2, further comprising:
an evaluation result display unit that displays a screen based on the evaluation of the determination result, wherein
the evaluation result display unit displays an image that is the input data, an image of a distribution of a class on the image that is the determination result, and an image of a distribution of uncertainty on the image.

7. The determination evaluation device according to claim 2, wherein
the uncertainty calculation unit sets, as uncertainty, a variance value of a class of each pixel calculated using a Monte Carlo dropout.

8. A determination evaluation method that evaluates a determination result for input data based on a determination model, the determination evaluation method comprising:
calculating uncertainty of the determination result; and
evaluating the determination result on a basis of the uncertainty.

9. A determination evaluation program that evaluates a determination result for input data based on a determination model, the determination evaluation program causing a computer to execute:
calculating uncertainty of the determination result; and
evaluating the determination result on a basis of the uncertainty.
